# EUROPÄISCHE PATENTANMELDUNG

(11) **EP 1 527 724 A1**
(43) Veröffentlichungstag der Anmeldung: **04.05.2005**
(21) Anmeldenummer: 04105233.3
(22) Anmeldetag: 22.10.2004
(51) Int. Cl.: A47J 37/12

(54) **Medienerhitzer**

(30) Priorität: 30.10.2003 ES 200302577
(71) Anmelder: BSH Bosch und Siemens Hausgeräte GmbH, 81739 München (DE)
(72) Erfinder: Lete Aldasoro, Juan, 31820, Etxarri-Aranaz (ES)

(57) **Zusammenfassung**

Die Erfindung betrifft einen Medienerhitzer, insbesondere zum Bereiten und/oder Garen von flüssigen Speisen bzw. Flüssigkeiten, mit einem Gehäuse (12), das eine obere Gehäuseöffnung (14) zur Aufnahme eines Topfes (16) mit weitgehend flachem Topfboden (30) aufweist, und mit einer außen am Topfboden (30) angeordneten Heizeinrichtung. Es ist vorgesehen, dass die Heizeinrichtung (30) als Heizmodul (24) ausgebildet ist, das als Ganzes vom Gehäuse (12) trennbar ist.

## Beschreibung

Die vorliegende Erfindung betrifft einen Medienerhitzer, insbesondere zum Bereiten und/oder Garen von Speisen bzw. Flüssigkeiten gemäß Oberbegriff des Patentanspruchs 1.

Medienerhitzer sind üblicherweise als sogenannte Friteusen in unterschiedlichen Ausführungsformen bekannt. Bei bekannten Elektro-Friteusen ist ein das Frittierfett aufnehmendes Frittiergefäß dauerhaft in ein Isoliergefäß integriert. Eine elektrische Heizeinrichtung befindet sich normalerweise ebenfalls innerhalb des Isoliergefäßes oder ist innerhalb oder außerhalb des Frittiergefäßes angeordnet und mit diesem fest verbunden. Um die Einzelteile der Friteuse besser reinigen zu können, ist es sinnvoll, ein Frittiergefäß bzw. einen Topf trennbar vom Isoliergefäß auszuführen, so dass der Topf und das Gehäuse getrennt voneinander gereinigt werden können. Eine solche Elektro-Friteuse mit voneinander trennbaren Einzelteilen ist bspw. aus der DE 197 14 038 A1 bekannt.

Ein Medienerhitzer mit einem sog. Dualzweck-Topf zum Braten und Frittieren ist weiterhin aus der DE 202 07 570 U1 bekannt. Innerhalb des Topfkörpers ist eine elektrische Heizschlange angeordnet, die aus einem Gehäuse entnehmbar und damit vom Topf trennbar ausgebildet ist. Die Heizschlange ragt im betriebsbereiten Zustand in das Topfinnere und kommt damit mit den zu erhitzenden Speisen oder Flüssigkeiten in Kontakt. Die Heizschlange unterliegt daher einer relativ starken Verschmutzung und kann u. U. durch anbrennende Speisen oder Flüssigkeiten beschädigt werden.

Die DE 88 01 742 U1 beschreibt eine elektrisch beheizbare Friteuse, bei der an einer Außenwandseite eines Behälters eine Heizeinrichtung angeordnet ist, die als auf dem Behälter aufschieb- und abnehmbare Baueinheit ausgebildet ist.

Eine Aufgabe der vorliegenden Erfindung besteht darin, einen Medienerhitzer mit einer elektrischen Heizeinrichtung zur Verfügung zu stellen, dessen Einzelteile voneinander trennbar sind und bei dem eine gute Wärmeübertragung zwischen Heizeinrichtung und topfförmigem Behälter gewährleistet ist.

Diese Aufgabe wird mit dem Gegenstand des Patentanspruchs 1 gelöst. Merkmale vorteilhafter Weiterbildungen der Erfindung ergeben sich aus den abhängigen Ansprüchen.

Ein Medienerhitzer mit den Merkmalen des Patentanspruchs 1 umfasst eine Heizeinrichtung, die als Heizmodul ausgebildet ist, das als Ganzes aus einem Gehäuse des Medienerhitzers entnehmbar und von einem Topf trennbar ist. Das Heizmodul kann insbesondere ein elektrisch beheizbares Heizelement aufweisen, das sich in eingeschobener Stellung des Heizmoduls in einem Berührkontakt mit dem Topfboden befindet. Das Heizelement befindet sich außerhalb des Topfes, so dass dieser ausschließlich von außen erhitzt wird. Das Heizelement unterliegt im Betrieb keiner nennenswerten Verschmutzung, da es mit den zu erhitzenden Speisen oder Flüssigkeiten nicht in Kontakt kommt. Die leichte Entnehmbarkeit des Heizmoduls ermöglicht dennoch eine einfache Reinigung des Heizmoduls, sollte dies notwendig sein.

Vorzugsweise wird das Heizelement in eingeschobener Stellung des Heizmoduls federnd an den Topfboden gedrückt, so dass eine gute Wärmeübertragung zwischen Heizelement und Topf mit darin befindlicher zu garender Flüssigkeit gewährleistet ist. Die modulare Gestaltung des Heizmoduls, das trennbar vom Gehäuse des Medienerhitzers ausgebildet ist, ermöglicht eine Reinigung aller Einzelteile unabhängig voneinander, so dass insbesondere das Gehäuse und der Topf getrennt voneinander in eine Geschirrspülmaschine oder dergleichen eingebracht werden können. Das Heizmodul kann separat gereinigt werden. Hierzu kann es sinnvoll sein, dass das Heizmodul zumindest spritzwassergeschützt ist. Gegebenenfalls kann das Heizmodul in einer Ausführungsform der Erfindung auch flüssigkeitsdicht verkapselt sein. Auf diese Weise kann es zumindest unter fließendem Wasser gereinigt und abgespült werden.

Eine bevorzugte Ausführungsform der Erfindung sieht vor, dass das Heizmodul in eingeschobener Stellung mit dem Gehäuse verrastet ist. Zur Sicherstellung einer möglichst großen Wärme übertragenden Oberfläche zwischen Topfboden und Oberfläche des Heizelements kann dieses eine U-förmige, eine spiralförmige oder eine mäanderförmige Heizwendel aufweisen.

Eine weitere Ausgestaltung der Erfindung sieht vor, dass an einer Unterseite des Topfbodens Führungsschienen zur Führung des Heizelements beim Einschieben oder Entnehmen des Heizmoduls angeordnet sind. Auf diese Weise kann ein Verklemmen oder Verkanten des Heizmoduls bei dessen Einschieben oder Entnehmen zuverlässig verhindert werden.

Das Heizmodul kann einen Temperatursensor aufweisen, der sich bei eingeschobenem Heizmodul in Berührkontakt mit dem Topf befindet. Um einen zuverlässigen Berührkontakt zu gewährleisten, kann der Temperatursensor eine federnde Lagerung aufweisen, so dass er bei eingeschobenem Heizmodul gegen die Topf-Seitenwand gedrückt wird.

Die Erfindung wird nachfolgend anhand eines bevorzugten Ausführungsbeispiels unter Bezugnahme auf die beiliegenden Zeichnungen näher erläutert. Dabei zeigt:

Figur 1 eine schematische Schnittdarstellung eines erfindungsgemäßen Medienerhitzers mit eingeschobenem Heizmodul,

Figur 2 eine schematische Schnittdarstellung des Medienerhitzers mit teilweise aus einem Gehäuse herausgezogenem Heizmodul und

Figur 3 eine Draufsicht auf eine beispielhafte Ausgestaltung eines Heizelements des Heizmoduls.

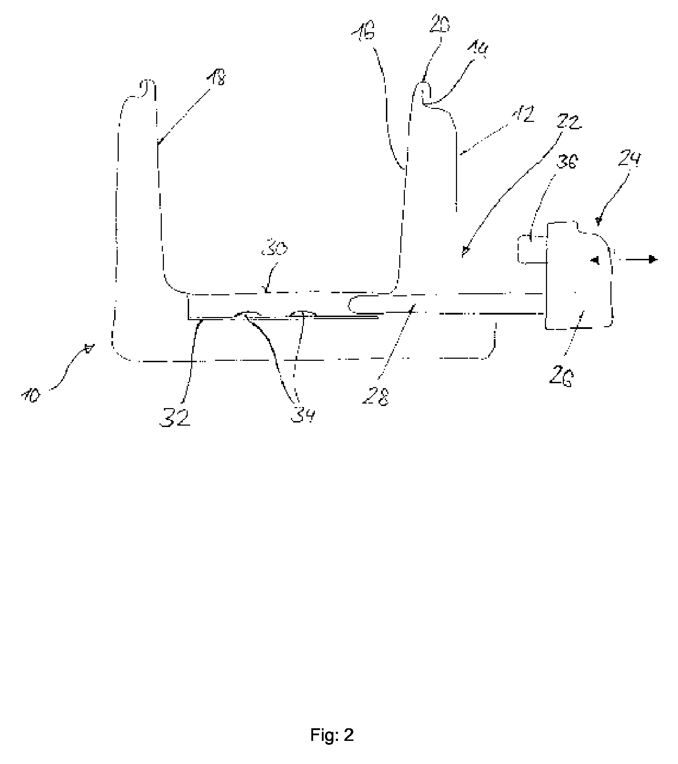

Der Medienerhitzer 10 umfasst ein Gehäuse 12 mit einer oberen Gehäuseöffnung 14 zur Aufnahme eines Topfes 16, in dem zu erhitzende Speisen beziehungsweise Flüssigkeiten gegart und bereitet werden können. Der Topf 16 weist zylindrische oder schwach geneigte Seitenwände 18 sowie einen umgebördelten oder zumindest über die Gehäuseöffnung 14 ragenden oberen Rand 20 auf, mit dem der Topf 16 in die obere Gehäuseöffnung 14 des Gehäuses 12 eingehängt werden kann. Das Gehäuse 12 weist in einem mittleren seitlichen Bereich eine Aufnahmeöffnung 22 zum Einschub eines Heizmoduls 24 auf, das seitlich in horizontaler Richtung in die Aufnahmeöffnung 22 eingeschoben oder aus dieser entnommen werden kann (vgl. Figur 2). Das Gehäuse 12 kann vorzugsweise eine thermische Isolierung aufweisen, um den Wirkungsgrad beim Erhitzen des Topfes 16 zu erhöhen.

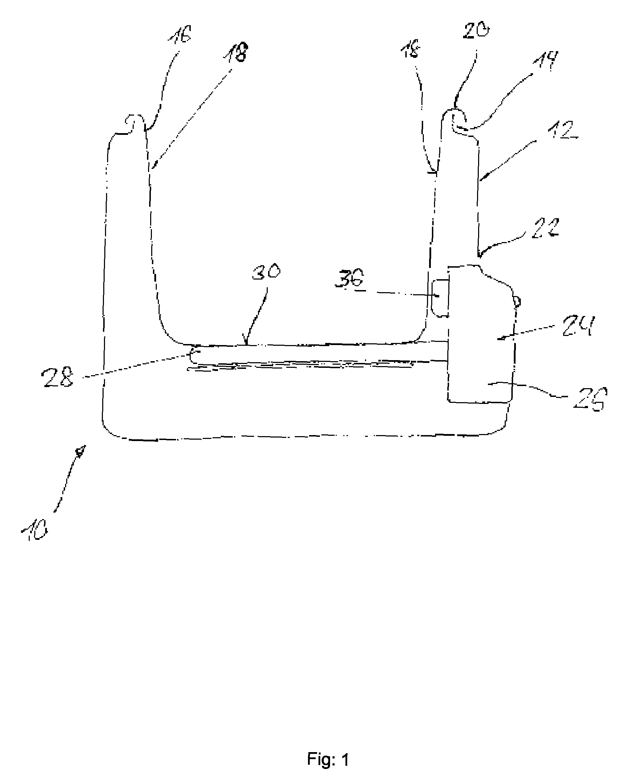

Das Heizmodul 24 umfasst ein Modulgehäuse 26 mit darin untergebrachter Steuerschaltung (nicht dargestellt) sowie ein Heizelement 28, das aus dem Modulgehäuse 26 ragt und im vollständig eingeschobenen Zustand des Heizmoduls 24 (Figur 1) in flächigem Berührkontakt mit dem weitgehend flachen Topfboden 30 steht.

Das Modulgehäuse 26 ist vorzugsweise so ausgebildet, dass es im eingeschobenen Zustand zumindest teilweise in der Aufnahmeöffnung 22 des Gehäuses 12 versenkt ist. Gegebenenfalls können Griffabschnitte vorgesehen sein, damit das Heizmodul 24 gegen die Kraft der Rastverbindung aus dem Gehäuse 12 herausgezogen werden kann.

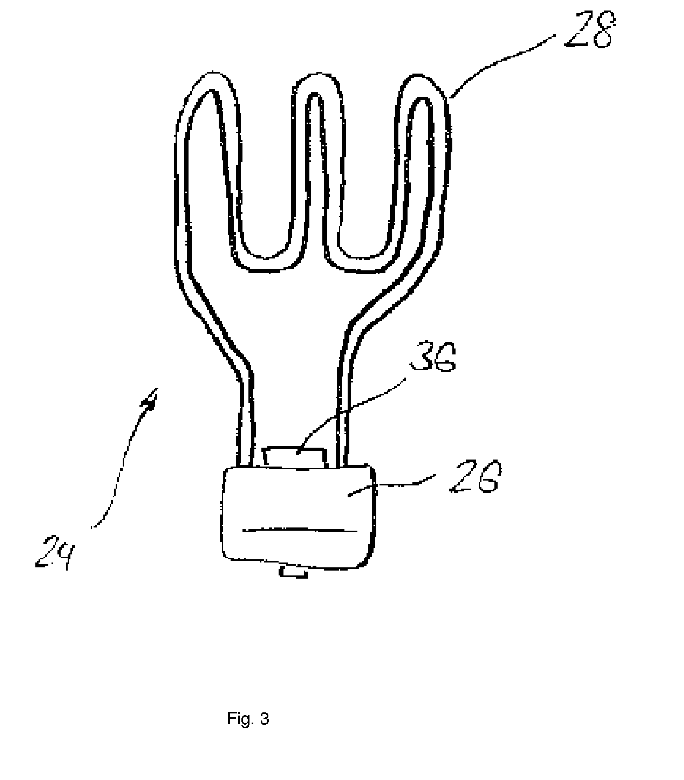

Das Heizelement 28 kann eine U-förmige, eine spiralförmige oder eine mäanderförmig geformte Heizwendel aufweisen (vgl. Figur 3), die mittels Führungsschienen 32 beim Einschieben des Heizmoduls 24 geführt wird, so dass das Heizelement 28 nicht verkantet werden kann. Vorzugsweise wird das Heizelement 28 beim Verschieben im vollständig eingeschobenen Zustand mittels Federelementen 34 von unten an den Topfboden 30 gedrückt, so dass ein möglichst weitgehender Berührkontakt zur besseren Wärmeübertragung zwischen Heizelement 28 und Topfboden 30 herrscht.

Weiterhin kann das Heizmodul 24 einen Temperatursensor 36 aufweisen, der bei vollständig eingeschobenem Heizmodul 24 in Berührkontakt mit einer Stelle der Seitenwand 18 des Topfes 16 gebracht ist. Der Temperatursensor 36 dient zur Lieferung eines Signals für die Steuerschaltung, um eine Regelung einer voreingestellten Temperatur zu ermöglichen. Der Temperatursensor 36 ist vorzugsweise federnd im Modulgehäuse 26 gelagert, so dass er im verrasteten Zustand des Heizmoduls 24 unter Federbelastung an die Seitenwand 18 gedrückt ist.

Der Topf 16 kann auf einfache Weise vom Gehäuse 12 getrennt werden, so dass beide Teile unabhängig voneinander gereinigt werden können. Auch das Heizmodul 24 kann aufgrund seiner separaten Entnehmbarkeit aus dem Gehäuse 12 unabhängig von den übrigen Teilen gereinigt werden. Um die Reinigbarkeit des Heizmoduls 24 zu erleichtern, weist dieses vorzugsweise eine Abdichtung gegen eindringende Feuchtigkeit auf. Damit ist es zudem im Betrieb des Medienerhitzers 10 gegen unbeabsichtigtes Eindringen von Flüssigkeit geschützt.

### Bezugszeichenliste

- 10: Medienerhitzer
- 12: Gehäuse
- 14: Gehäuseöffnung
- 16: Topf
- 18: Seitenwand
- 20: oberer Rand
- 22: Aufnahmeöffnung
- 24: Heizmodul
- 26: Modulgehäuse
- 28: Heizelement
- 30: Topfboden
- 32: Führungsschiene
- 34: Federelement
- 36: Temperatursensor

## Patentansprüche

1. Medienerhitzer, insbesondere zum Bereiten und/oder Garen von Speisen bzw. Flüssigkeiten, mit einem Gehäuse (12), das eine obere Gehäuseöffnung (14) zur Aufnahme eines Topfes (16) mit weitgehend flachem Topfboden (30) aufweist, und mit einer außen am Topfboden (30) angeordneten Heizeinrichtung, **dadurch gekennzeichnet, dass** die Heizeinrichtung als Heizmodul (24) ausgebildet ist, das als Ganzes vom Gehäuse (12) trennbar ist.

2. Medienerhitzer nach Anspruch 1, **dadurch gekennzeichnet, dass** das Heizmodul (24) ein elektrisch beheizbares Heizelement (28) umfasst.

3. Medienerhitzer nach Anspruch 1 oder 2, **dadurch gekennzeichnet, dass** sich das Heizelement (28) in eingeschobener Stellung des Heizmoduls (24) in Berührkontakt mit dem Topfboden (30) befindet.

4. Medienerhitzer nach einem der voranstehenden Ansprüche, **dadurch gekennzeichnet, dass** das Heizelement (28) in eingeschobener Stellung des Heizmoduls (24) mittels eines Federelements (34) an den Topfboden (30) gedrückt ist.

5. Medienerhitzer nach einem der voranstehenden Ansprüche, **dadurch gekennzeichnet, dass** das Heizmodul (24) in eingeschobener Stellung mit dem Gehäuse (12) verrastet ist.

6. Medienerhitzer nach einem der voranstehenden Ansprüche, **dadurch gekennzeichnet, dass** das Heizelement (28) eine U-förmige, eine spiralförmig oder eine mäanderförmige Heizwendel aufweist.

7. Medienerhitzer nach einem der voranstehenden Ansprüche, **dadurch gekennzeichnet, dass** an einer Unterseite des Topfbodens (30) Führungsschienen (32) zur Führung des Heizelements (28) beim Einschieben oder Entnehmen des Heizmoduls (24) angeordnet sind.

8. Medienerhitzer nach einem der voranstehenden Ansprüche, **dadurch gekennzeichnet, dass** das Heizmodul (24) spritzwassergeschützt ist.

9. Medienerhitzer nach einem der voranstehenden Ansprüche, **dadurch gekennzeichnet, dass** das Heizmodul (24) flüssigkeitsdicht verkapselt ist.

10. Medienerhitzer nach einem der voranstehenden Ansprüche, **dadurch gekennzeichnet, dass** das Heizmodul (24) einen Temperatursensor (36) aufweist, der sich bei eingeschobenem Heizmodul (24) in Berührkontakt mit dem Topf (14) befindet.

11. Medienerhitzer nach Anspruch 10, **dadurch gekennzeichnet, dass** der Temperatursensor (36) bei eingeschobenem Heizmodul (24) mittels Federkraft gegen eine Seitenwand (18) des Topfes (16) gedrückt ist.
